# EUROPÄISCHE PATENTSCHRIFT

(11) **EP 1 702 580 B1**
(45) Veröffentlichungstag und Bekanntmachung des Hinweises auf die Patenterteilung: **12.03.2014**
(21) Anmeldenummer: 06000620.2
(22) Anmeldetag: 12.01.2006
(51) Int. Cl.: A61C 5/06

(54) **Kartusche zum Lagern und Ausbringen einer Masse**
Cartridge for carrying and dispensing a material
Cartouche pour stocker et appliquer une pâte

(30) Priorität: 14.03.2005 DE 102005011643
(43) Veröffentlichungstag der Anmeldung: 20.09.2006
(73) Patentinhaber: Ivoclar Vivadent AG, 9494 Schaan (LI)
(72) Erfinder: Galehr, Klaus, 6824 Schlins (AT); Roth-Wachter, Maylin, 9490 Vaduz (LI); Kropp, Petra, 9470 Werdenberg (CH); Müller, Frank, 6800 Feldkirch (AT)
(74) Vertreter: Baronetzky, Klaus

(56) Entgegenhaltungen:
- FR-A- 2 642 299
- US-A- 5 122 057
- US-A1- 2003 096 212

## Beschreibung

Die Erfindung betrifft eine Kartusche für das Ausbringen einer Masse, schwerpunktmäßig einer Dentalmasse, über eine Ausbringvorrichtung, in die die Kartusche nach der Art eines Einmalprodukts einsetzbar ist, gemäß dem Oberbegriff von Anspruch 1.

Derartige Kartuschen sind weithin verbreitet und in zahlreichen Formen entwickelt worden.

Häufiges Problem derartiger Kartuschen ist es, dass sich die in der Kartusche aufgenommene Masse nicht vollständig ausdrücken lässt, gerade dann, wenn eine Ausbringtülle sich schräg von einem Grundkörper der Kartusche nach unten erstreckt.

Um zu gewährleisten, dass nach Möglichkeit dennoch ein vollständiges Ausbringen möglich ist, ist gemäß der EP 848 935 A1 ein spezieller Kolben vorgesehen worden, dessen vorderer Teil elastisch verformbar ist und so in der Lage ist, die Masse aus der Kartusche vollständig auszudrücken.

Es ist wünschenswert, mit der gleichen Austreibvorrichtung unterschiedliche Mengen von Dentalmassen austreiben zu können. Hierzu ist es vorgeschlagen worden, die Länge des Grundkörpers der Kartusche an die Erfordernisse anzupassen. Bei einer geringen Menge der Dentalmasse kann dementsprechend eine Kartusche mit vergleichsweise kurzem Grundkörper verwendet werden, während bei einer großen erwünschten Menge der Dentalmasse eine Kartusche mit einer erheblichen Länge eingesetzt werden kann. Der Kolben weist bei derartigen Kartuschen stets im Wesentlichen den gleichen Durchmesser auf, und die Kartusche wird durch den ein Lastangriffsmittel bildenden Haltekragen in einer entsprechenden Austreibvorrichtung gehalten.

Bei einem langen Grundkörper muss der Kolben einen langen Weg durch den Grundkörper hindurch zurücklegen. Wenn bei einem derartigen Körper der vordere Teil so elastisch ausgeführt ist, dass er den erheblich geringeren Durchmesser der Ausbringtülle annehmen kann, besteht die Gefahr, dass sich dieser vorderer Bereich bereits vorab seitlich verklemmt und komprimiert, so dass die betreffende Kartusche nicht oder nicht vollständig ausgedrückt werden kann.

Um die Dentalmasse auch in tiefliegenden und schwer zugänglichen Bereiche einzubringen, ist es günstig, wenn die Ausbringtülle einen recht geringen Durchmesser aufweist. In diesem Fall kann der Innendurchmesser der Ausbringtülle beispielsweise auch lediglich ein Fünftel des Innendurchmessers des Grundkörpers betragen.

Ferner ist es in US-A-5 122 057 bereits vorgeschlagen worden, einen vergleichsweise kurzen Kolben, welcher einen verjüngten Abschnitt aufweist, in einem gebogenen Grundkörper der Kartusche einzusetzen. Der Grundkörper ist in Form eines Ringsegments ausgebildet, wobei die Ausbringtülle mit dem Grundkörper eine gemeinsame Längsachse hat, welche den Teil eines Umfanges C bildet. Dieser Umfang wird durch die Rotation eines Radius R um den Drehpunkt P erzeugt, wodurch das Ringsegment mit einem mittleren Radius R gebildet wird.

Bei einer derartigen Kartusche lässt sich zwar die erwünscht Erstreckung der Ausbringtülle nach unten realisieren, proble-matisch ist jedoch, dass der Kolben oder Austreibkörper zur Verkantung neigt, gerade dann, bevor sein verjüngter Durchmesserbereich in die Ausbringtülle gelangt. Durch das Verkanten wird einerseits die Abdichtung zwischen Kolben und Grundkörper aufgehoben, andererseits neigt der Kolben beim Verkanten zu einer Verklemmung, die die Kartusche unbrauchbar macht.

Zwar könnte der Kolben im Grunde verlängert werden. Dann würde er jedoch nicht mehr richtig in dem bogenförmigen Grundkörper verlaufen.

US 2003/0096212 offenbart eine Kartusche mit einem elastischen Kolben.

US 5122057 A offenbart eine Kartusche mit einem gebogenen Kolben.

Wenn andererseits dem Kolben selbst eine Bogenform gegeben wird, besteht die Gefahr, dass er sich ohne zusätzliche Maßnahmen verdreht, so dass wiederum die Verklemmungsgefahr wiederum erhöht wird. Insofern ist es nicht überraschend, dass eine derartige Lösung sich nicht durchgesetzt hat.

Daher liegt der Erfindung die Aufgabe zugrunde, eine Kartusche für das Ausbringen einer Masse gemäß dem Oberbegriff von Anspruch 1 zu schaffen, die in unterschiedlichen Größen herstellbar sowie leicht und zuverlässig austreibbar ist, ohne dass eine ergonomische günstige Absenkung der Ausbringtülle erschwert würde.

Diese Ausgabe wird erfindungsgemäß durch Anspruch 1 gelöst. Vorteilhafte Weiterbildungen ergeben sich aus den Unteransprüchen.

Erfindungsgemäß ist die Kombination folgender Merkmale besonders günstig: Der Grundkörper hat einen zylindrischen Abschnitt und hieran anschließend einen gebogenen Abschnitt, an den sich wiederum die Ausbringtülle anschließt. Der Kolben seinerseits ist wenigstens teilweise, bevorzugt in seinem vorderen Bereich, der in den gebogenen Abschnitt eindringen kann, biegsam, aber nicht hinsichtlich seines Durchmessers veränderbar. Die Biegsamkeit erlaubt es, dass die erwünschte bogenförmige Führung des Kolbens in diesem Bereich realisiert werden kann, ohne dass die Führungsfähigkeit im Übrigen beeinträchtigt wäre.

Insbesondere kann der Kolben eine solche Länge aufweisen, dass Verkantungen ausgeschlossen sind. Überraschend ergibt sich mit der Kombination des zylindrischen und des gebogenen Abschnitts eine reibungsarme Führung des Kolbens im Grundkörper, wobei es sich versteht, dass es erfindungsgemäß günstig ist, wenn der elastische oder biegsame Abschnitt des Kolbens die gleiche Länge wie der gebogene Abschnitt aufweist, während der nichtbiegsame Abschnitt des Kolbens eine solche Länge aufweist, die jedenfalls das Verklemmen sicher vermeidet. Beispielsweise kann die Länge das zwei- oder dreifache des Innendurchmessers des Grundkörpers dessen zylindrischen Abschnitt betragen.

Erfindungsgemäß ist eine insofern störungsfreie Führung des Kolbens trotz der Realisierung des ergonomisch günstigen gebogenen Bereich der Kartusche möglich.

Erfindungsgemäß ist es möglich, einem Teil der Kartusche eine recht starke Biegung zu geben. Beispielsweise kann für den gebogenen Abschnitt ein Bogenwinkel von mehr als 30°, bevorzugt etwa 45° oder im Einzelfall auch einmal 60° realisiert werden. Hieran anschließend kann sich ein Bogenwinkel von weiteren 30°, in welchen sich die Ausbringtülle erstreckt, so dass der Gesamt-Bogenwinkel beispielsweise 75° oder auch 90° betragen kann.

Diese Lösung hat den Vorteil, dass die ausgebrachte Masse nahezu nach unten ausgedrückt wird, so dass auch schlecht erreichbare Hohlräume gut gefüllt werden können.

Überraschend ergibt sich erfindungsgemäß trotz der Realsierung des zylindrischen Abschnitts die Möglichkeit, eine recht stark nach unten abgesenkte Austrittsrichtung zu erzielen, wobei erfindungsgemäß durch die Realisierung einer gebogenen Ausbringtülle ebenfalls mit recht geringem Bogenradius die ausgebrachte Masse ebenfalls bogenförmig austritt.

In weiter bevorzugter Ausgestaltung ist es vorgesehen, dass der Innendurchmesser des gebogenen Abschnitts dem Innendurchmesser des geraden Abschnitts entspricht, und auch die Außendurchmesser - mindestens im Übergangsbereich der Abschnitte - einander entsprechen.

In einer weiteren bevorzugten Ausgestaltung ist es vorgesehen, dass die Länge der Ausbringtülle etwas geringer, beispielsweise um 30 % geringer als die Länge des gebogenen Abschnitts ist und dass der Innendurchmesser der Ausbringtülle geringer als der Innendurchmesser des gebogenen Abschnitts ist, beispielsweise etwa die Hälfte.

In einer bevorzugten Ausgestaltung ist es vorgesehen, dass der Grundkörper einen im Wesentlichen zylindrischen Abschnitt und einen sich an die Ausbringtülle anschließenden gebogenen Abschnitt aufweist und dass der Kolben wenigstens teilweise biegsam ist.

In einer weiteren bevorzugten Ausgestaltung ist es vorgesehen, dass der Grundkörper für die Aufnahme des Kolbens der Austreibvorrichtung geeignet ausgebildet ist, in welche Austreibvorrichtung der Grundkörper einsetzbar oder an welcher er befestigbar ist, und dass der Kolben in seinem vorderen Bereich biegsam ausgebildet ist, aber einen bei Betätigen des Kolbens gleichbleibenden Durchmesser aufweist.

In einer weiteren bevorzugten Ausgestaltung ist es vorgesehen, dass die Ausbringtülle gebogen ist und dass sich der Bogen der Ausbringtülle an den gebogenen Abschnitt im Wesentlichen achsenkongruent und insbesondere mit dem gleichen Bogenradius anschließt.

In einer weiteren bevorzugten Ausgestaltung ist es vorgesehen, dass die Ausbringtülle einen Innenkanal mit einem gegenüber dem Grundkörper deutlich, insbesondere auf weniger als die Hälfte, reduzierten Innendurchmesser sowie einen deutlich reduzierten Außendurchmesser aufweist und dass insbesondere der Außendurchmesser der Ausbringtülle zur Spitze der Ausbringtülle hin konisch zuläuft.

In einer weiteren bevorzugten Ausgestaltung ist es vorgesehen, dass die Kartusche als Einmal-Kartusche ausgebildet und mit der Masse befüllt ist.

In einer weiteren bevorzugten Ausgestaltung ist es vorgesehen, dass der Innendurchmesser des gebogenen Abschnitts des Grundkörpers über den Verlauf des gebogenen Abschnitts im Wesentlichen konstant ist.

In einer weiteren bevorzugten Ausgestaltung ist es vorgesehen, dass sich der gebogene Abschnitt über einen Bogenwinkel von mehr als 20° und weniger als 90°, insbesondere etwa 45°, erstreckt.

In einer weiteren bevorzugten Ausgestaltung ist es vorgesehen, dass der Bogenradius des gebogenen Abschnitts über im Wesentlichen die gesamte Länge des gebogenen Abschnitts konstant ist.

In einer weiteren bevorzugten Ausgestaltung ist es vorgesehen, dass anschließend an den zylindrischen Abschnitt der Bogenradius des gebogenen Abschnitts größer oder kleiner als der Bogenradius im übrigen Abschnitt ist und dass der Bogenradius über einen Bogenwinkel von 2 bis 20° auf einen konstanten Bogenwinkel abnimmt.

In einer weiteren bevorzugten Ausgestaltung ist es vorgesehen, dass der Bogenabschnitt eine Bogenradius von dem 3 bis 20-fachen, insbesondere etwa dem 5-fachen, des Innendurchmessers des Bogenabschnitts aufweist.

In einer weiteren bevorzugten Ausgestaltung ist es vorgesehen, dass der freie Endbereich des ersten Abschnitts mit einem Lastangriffsmittel versehen ist, das wenigstens ein Formschlusselement ist. Das Lastangriffsmittel ist in Form eines den Außendurchmesser eines Abschnitts radial überragenden Flansches, eines an der Außenseite eines Abschnitts angeordneten Außengewindes oder Hinterschnittes ausgebildet.

In einer modifizierten bevorzugten Ausgestaltung ist es vorgesehen, dass der erste zylindrische Abschnitt zwischen dem gebogenen zweiten Abschnitt und der Ausbringtülle angeordnet ist.

In einer weiteren bevorzugten Ausgestaltung ist es vorgesehen, dass zumindest ein sich an den zweiten Abschnitt anschließender Bereich des ersten Abschnitt transparent ausgebildet ist, bevorzugt aus einem transparenten Material gebildet ist, das insbesondere farbig transparent ist oder mit einer tranparenten, farbigen Schicht versehen ist.

Bei dieser Ausgestaltung kann das farbige Material oder die farbige Schicht für Licht mit einer Wellenlänge zwischen 350 nm und 500 nm lichtdurchlässig sein. Der zylindrische erste Abschnitt und die Ausbringtülle sind aus einem lichtundurchlässigen Material gefertigt, so dass sie lichtempfindliches Dentalmaterial dort sicher lagern können.

Die Ausbringtülle ist bevorzugt gebogen ausgebildet und weist die gleiche Biegung wie der zweite Abschnitt auf.

Bevorzugt weist der Innenkanal der Ausbringtülle über seine gesamte Länge einen konstanten Durchmesser auf, oder die lichte Weite des Innenkanals vergrößert sich zum freien Ende der Ausbringtülle hin.

In weiterer vorteilhafter Ausgestaltung ist es vorgesehen, dass der größte Teil des Kolbens im unausgepresstem Zustand der Kartusche im ersten Abschnitt angeordnet ist.

Ferner besteht der Kolben bevorzugt aus einem farbigen Material. Er kann aber auch mit einer farbigen Schicht überzogen oder mit einer visuell erkennbaren Markierung versehen sein. Bei dieser Ausführungsform ist es günstig, wenn der erste Abschnitt wenigstens eine seitliche Durchtrittsöffnung, bevorzugt in Form eines Längsschlitzes, aufweist, dessen Breite - betrachtet senkrecht zur Längserstreckung des ersten Abschnitts - kleiner als der Innendurchmessers des Grundkörpers ist, wobei der erste Abschnitt und der Kolben bevorzugt miteinander zusammenwirkende Füllstandanzeigen aufweisen. Der Längsschlitz weist insbesondere eine Breite von 10 bis 30 %, bevorzugt etwa 20 %, des Innendurchmessers des Grundkörpers auf.

Schließlich ist es in einer weiteren Ausgestaltung vorgesehen, dass die Auslassöffnung der Ausbringtülle mit einer Abdeckkappe verschließbar ist, die insbesondere die gleiche Farbe wie der Kolben und/oder der erste Abschnitt aufweist. Die Abdeckkappe kann insbesondere aus einem elastischem Material bestehen und sich an die Form der Ausbringtülle leicht anpassen kann.

Der Grundkörper und/oder die Ausbringtülle und/oder die Abdeckkappe können aus Kunststoff aufgebildet sein.

In einer weiteren bevorzugten Ausgestaltung ist es vorgesehen, dass sich die Außenkontur des zweiten Abschnitts zur Ausbringtülle hin verjüngt.

In einer weiteren bevorzugten Ausgestaltung ist es vorgesehen, dass die Ausbringtülle einen Innendurchmesser aufweist, der an dem Grundkörper angrenzend einen Durchmesser eines Innenkanals von 10 bis 60, bevorzugt 20 bis 40 und insbesondere näherungsweise 30 % des Durchmessers des Innendurchmessers des gebogenen Abstands des Grundkörpers aufweist.

In einer weiteren bevorzugten Ausgestaltung ist es vorgesehen, dass eine der Ausbringtülle zugewandete Auslassöffnung des zweiten Abschnitts in einer Ebene liegt, die gegenüber einer sich senkrecht zur Längsrichtung des ersten Abschnitts erstreckenden Ebene unter einem Winkel von 15° bis 60° angeordnet ist.

In einer weiteren bevorzugten Ausgestaltung ist es vorgesehen, dass die Ausbringtülle gerade ausgebildet ist.

In einer weiteren bevorzugten Ausgestaltung ist es vorgesehen, dass die Ausbringtülle elastisch ausgebildet ist.

In einer weiteren bevorzugten Ausgestaltung ist es vorgesehen, dass sich der Innendurchmesser des Grundkörpers zum freien Ende des ersten Abschnitts hin erweitert.

Weitere Vorteile, Einzelheiten und Merkmale ergeben sich aus der nachfolgenden Beschreibung mehrere Ausführungsformen der Erfindung anhand der Zeichnung:

Es zeigen:
- Fig. 1: eine schematische Seitenansicht einer erfindungsgemäßen Kartusche in einer ersten Ausführungsform;
- Fig. 2: die Ausführungsform gemäß Fig. 1 im Schnitt;
- Fig. 3: die Ausführungsform gemäß Fig. 1 und 2, jedoch eingesetzt in ein Austreibgerät;
- Fig. 4: eine modifizierte Ausführungsform einer erfindungsgemäßen Kartusche;
- Fig. 5: eine weitere modifizierte Ausführungsform einer erfindungsgemäßen Kartusche;
- Fig. 6: eine weitere modifizierte Ausführungsform einer erfindungsgemäßen Kartusche;
- Fig. 7: ein Schnitt durch ein Detail einer weiteren Ausführungsform einer erfindungsgemäßen Kartusche in einer Ausführungsform;
- Fig. 8: ein Schnitt durch ein Detail einer weiteren Ausführungsform einer erfindungsgemäßen Kartusche in einer Ausführungsform;
- Fig. 9: ein Schnitt durch ein Detail der in den Fig. 1, 2, 3 dargestellten Ausführungsform; und
- Fig. 10: eine Seitenansicht einer letzten Ausführungsform einer erfindungsgemäßen Kartusche.

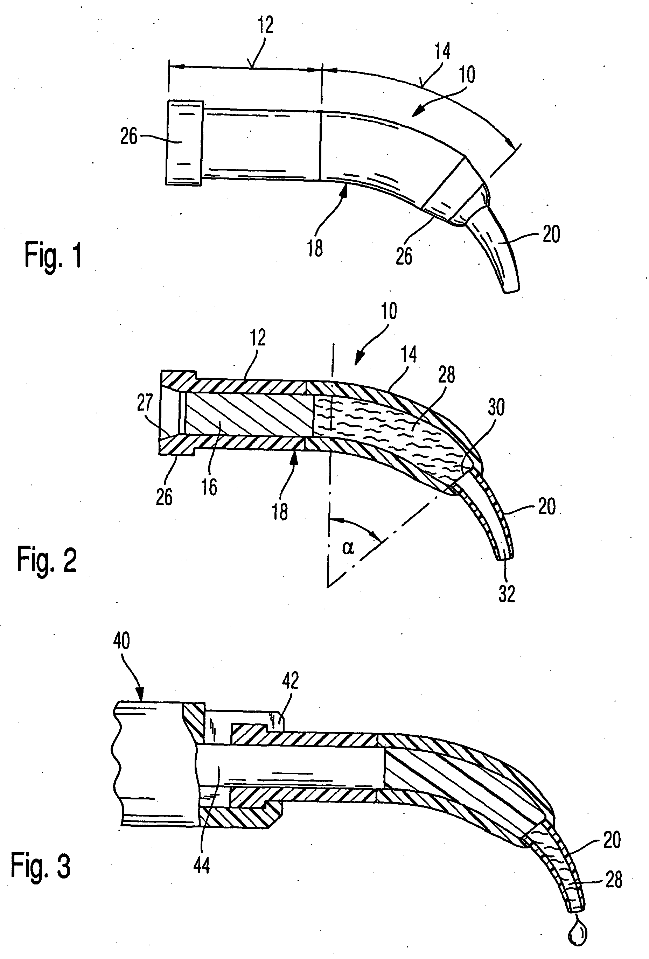

Die in Fig. 1 dargestellte Kartusche 10 weist einen ersten Abschnitt 12 und einen zweiten Abschnitt 14 auf, die sich aneinander anschließen und je bündig zueinander verlaufen, also im Bereich ihres Übergangs den gleichen Innendurchmesser und den gleichen Außendurchmesser aufweisen.

Wie aus Fig. 2 ersichtlich ist, ist die Kartusche 10 innen hohl und für die Aufnahme eines Kolbens 16 sowie eines Dentalmaterials 28 bestimmt.

Der erste Abschnitt 12 und der zweite Abschnitt 14 der Kartusche bilden zusammen den Grundkörper 18 der Kartusche.

Am vorderen Ende des zweiten Abschnitts 14 ist erfindungsgemäß eine Ausbringtülle 20 vorgesehen, deren Außendurchmesser kleiner als der Außendurchmesser des zweiten Abschnitts 14 ist und deren Innendurchmesser kleiner als der Innendurchmesser des zweiten Abschnitts 14 ist.

In dem darstellten Ausführungsbeispiel ist der erste Abschnitt 12 im Wesentlichen gerade, und zwar innen und außen, und der zweite Abschnitt 14 ist gebogen. Ferner ist auch die Ausbringtülle 20 gebogen, und zwar im gleichen Sinne wie der zweite Abschnitt 14. Bevorzugt sind der zweite Abschnitt 14 und die Ausbringtülle 20 kongruent gebogen, also so, dass die gebogenen Längsmittelachsen vom zweiten Abschnitt 14 und Ausbringtülle 20 an ihrer Übergangsstelle zusammenfallen. Dementsprechend ist ein aus Fig. 2 ersichtlicher Biegeradius 22 vorgesehen, der einen vergleichsweise geringen Wert hat. In dem dargestellten Ausführungsbeispiel beträgt der Bogenradius das 5-fache des Innendurchmessers des zweiten Abschnitts 14.

Im Übergangsbereich zwischen dem zweiten Abschnitt 14 und der Ausbringtülle 20 ist eine sich verjüngende Außenkontur 24 des zweiten Abschnitts 14 ausgebildet. Der Innendurchmesser des zweiten Abschnitts 14 ist jedoch in diesem Bereich konstant, so dass lediglich die Wandstärke des Grundkörpers 18 dort reduziert ist.

Aus Fig. 1 ist ersichtlich, dass an dem dem zweiten Abschnitt 14 gegenüberliegenden Ende des ersten Abschnitts 12 ein Lastangriffsmittel 26 ausgebildet ist. Dort ist innen ein Einführkonus 27 ausgebildet, so dass sich der Innendurchmesser des ersten Abschnittes 12 zu seinem freien Endbereich hin erweitert.

In der Ausführungsform gemäß Fig. 1, 2 und 3 ist das Lastangriffsmittel 26 als umlaufender Flansch ausgebildet, der in einen entsprechenden Aufnahmebereich eines Austreibgeräts einsetzbar ist und der Abstützung der Kartusche entgegen der Auspressrichtung dient.

Aus Fig. 2 ist ersichtlich, in welcher Weise sich der Kolben 16 in dem ersten Abschnitt 12 im Ausgangszustand erstrecken kann. Der Kolben 16 ist in dem dargestellten Ausführungsbeispiel vollständig aus einem elastischen Material, beispielsweise einem Elastomer, ausgebildet. Er kann aber auch aus zwei oder mehr unterschiedlichen Materialien bestehen. Er befindet sich im Innenraum des ersten Abschnitts 12 ein, dichtet dort ab und ragt etwas in den zweiten Abschnitt 14 hinein.

Demgegenüber ist in dem Ausgangszustand der zweite Abschnitt 14 vollständig mit einer Dentalmasse 28 gefüllt. Die Dentalmasse steht an einer Auslassöffnung 30 des zweiten Abschnitts 14 an, die den Übergang zur Ausbringtülle 20 bildet.

Wie aus Fig. 2 ersichtlich ist, ist ein Innenkanal 32 der Ausbringtülle 20 mit einem deutlich geringerem Innendurchmesser als der Innendurchmesser des zweiten Abschnitts 14 ausgebildet.

In dem dargestellten Ausführungsbeispiel besteht der zweite Abschnitt 14 aus einem schwarzen und lichtundurchlässigen Material, während der erste Abschnitt 12, der den Kolben 16 führt, aus einem transparenten Material ausgebildet ist. Der etwas in den zweiten Abschnitt ragende Kolben 16 verhindert einen Lichteinfall auf die Dentalmasse 18.

In diesem Lieferzustand ist bevorzugt die Ausbringtülle mit einer nicht dargestellten Abdeckkappe an ihrer vorderen Spitze verschlossen, so dass sie lichtgeschützt und luftdicht lagerbar ist.

Für das Ausdrücken der Masse aus der Kartusche ist ein nicht näher dargestelltes Austreibgerät 40 vorgesehen, das die Kartusche in seinem Aufnahmebereich 42 sicher führt und aufnimmt.

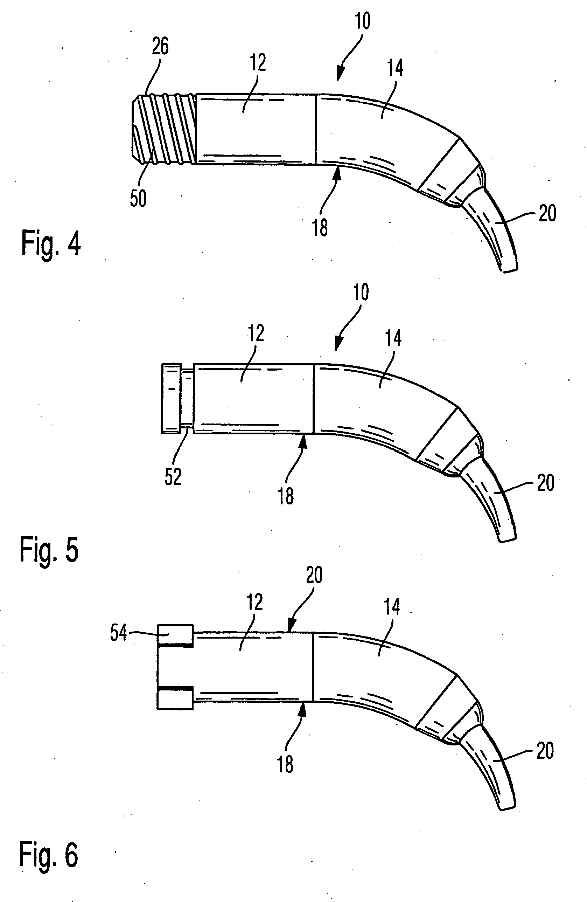

Ein entsprechendes, hierfür geeignetes Austreibgerät ist beispielsweise aus Fig. 6 der DE 199 45 706 D2 ersichtlich.

Das Austreibgerät 40 weist eine Austreibstange 44 auf, die in Richtung des Kolbens 16 verschiebbar ist. Der Durchmesser der Austreibstange 44 ist etwas kleiner als der Durchmesser des Kolbens 16. Durch Betätigen des Austreibgeräts 40 lässt sich der Kolben 16 in Richtung des zweiten Abschnitts 14 verschieben. Da er wenigstens teilweise biegbar ist, nimmt er die Form des gebogenen Abschnitts 14 an und drückt zugleich die Dentalmasse 28 über die Ausbringtülle 20 aus der Kartusche 10 heraus.

Durch die relativ starke Biegung des gebogenen Abschnitts 14 und der Ausbringtülle 20 entsteht ein Dentalmassenstrang 28, der sich praktisch vertikal nach unten bewegt und daher auch an schlecht erreichbaren Stellen positionierbar ist.

Aus Fig. 4, 5 und 6 sind weitere Ausführungsformen der erfindungsgemäßen Kartusche ersichtlich. So ist in Fig. 4 das Lastangriffsmittel 26 als Außengewinde 50 ausgebildet; bei der Ausführungsform gemäß Fig. 5 ist als Lastangriffsmittel eine umlaufende Nut 52 vorgesehen, die insofern die Ausbildung einer Hinterschneidung ermöglicht und bei der Ausführungsform der Kartusche gemäß Fig. 6 ist ein Bajonettverschluss oder Luer-lock vorgesehen, die ebenfalls für die formschlüssige Verbindung zwischen dem in Fig. 3 dargestellten Austreibgerät 40 und der Kartusche 10 einsetzbar sind.

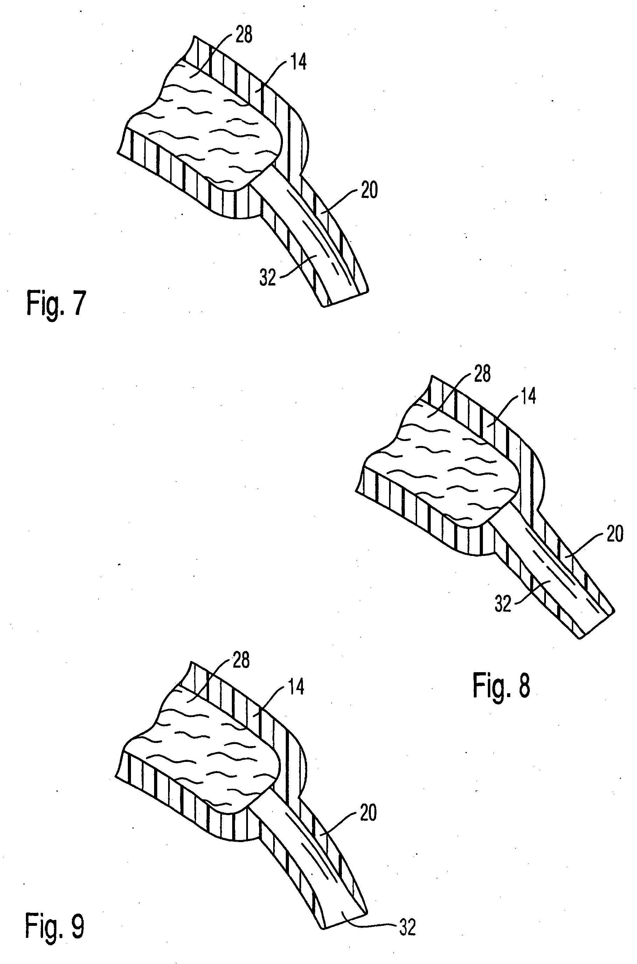

Aus den Fig. 7, 8 und 9 sind verschiedene Formen der Ausbringtülle 20 ersichtlich. Bei der Ausführungsform gemäß Fig. 7 ist eine achsenkongurent gebogene Ausbringtülle 20 vorgesehen, deren Innenkanal 32 einen konstanten Innendurchmesser aufweist.

Aus Fig. 8 ist demgegenüber eine Ausbringtülle 20 ersichtlich, die einen konstanten Innendurchmesser in Kanal 32 aufweist, jedoch im Gegensatz zu der Ausführungsform gemäß Fig. 7 gerade verläuft.

Diese Lösung kommt in Betracht, wenn bereits der gebogene Abschnitt 14 stark gebogen ist, so dass eine weitere Umlenkung des ausgepressten Dentalmassenstrangs nicht erforderlich ist.

Die Ausführungsform gemäß Fig. 9 zeichnet sich demgegenüber dadurch aus, dass der Innenkanal 32 der Ausbringtülle 20 endseitig im Mündungsbereich 57 innen aufgeweitet ist. Mit dieser Aufweitung ist die Strangführung toleranter. Auch wenn der Zahnarzt beim Auspressen der Kartusche und Einbringen der Dentalmasse in die zu füllende Kavität kleine Bewegungen des Austreibgeräts 40 macht, reißt der Dentalmassenstrang dann nicht so leicht ab, da er auslassseitig der Ausbringtülle 20 mit einem gewissen Spiel geführt ist.

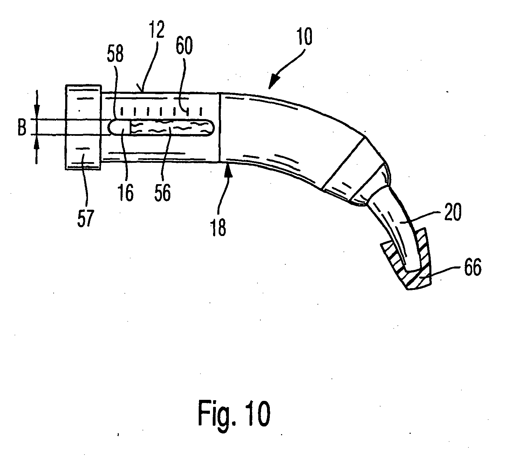

Aus Fig. 10 ist ersichtlich, in welcher Weise eine Füllstandsanzeige 56 realisierbar ist. Hierzu ist eine seitliche Durchtrittsöffnung in Form eines Längsschlitz 58 vorgesehen, der sich nahezu über die gesamte Länge des ersten Abschnitts 12 erstreckt. Durch den Längsschlitz 58 hindurch lässt sich die rückwärtige Stirnseite bzw. das rückwärtige Ende oder eine entsprechende Markierung des Kolben 16 erkennen. Ferner ist dem Längsschlitz 58 benachbart eine Maßskala 60 an dem geraden Abschnitt 12 angebracht, so dass durch Zuordnung einer entsprechender Markierung des Kolbens 16 erkennbar ist, in welchem Maße der Kolben 16 bereits eingeschoben ist - und damit in welchem Maße noch auszudrückende Dentalmasse zur Verfügung steht. Der Kolben kann auch mit einer Beschriftung versehen sein.

Aus Fig. 10 ist darüber hinaus ersichtlich, dass der vordere Bereich der Ausbringtülle 20 erfindungsgemäß mit einer Abdeckkappe 66 verschlossen sein kann. Die Abdeckkappe 66 besteht bevorzugt aus einem recht weichen und dementsprechend gut dichtenden Material, das bevorzugt ebenfalls lichtdicht ist und farblich an den Kolben 16 und/oder den ersten Abschnitt 12 angepasst ist.

## Patentansprüche

1. Kartusche zum Lagern und Ausbringen einer Masse, insbesondere einer Dentalmasse mit einem hülsenförmigen Grundkörper (18), welcher an einem Endbereich ein mit einem Applikationsinstrument formschlüssig zusammenwirkendes Lastangriffsmittel (26) aufweist, wobei in dem Grundkörper (18) ein axial versetzbarer und wenigstens teilweise biegbarer Kolben (16) angeordnet ist, und wobei der Grundkörper (18) einen ersten im Wesentlichen geraden Abschnitt (12) sowie einen zweiten, gebogenen Abschnitt (14) aufweist,
**dadurch gekennzeichnet, dass** eine sich an den Grundkörper (18) anschließende Ausbringtülle (20) vorgesehen ist, deren Innendurchmesser kleiner als der Innendurchmesser des Grundkörpers (18) ist, und dass der Kolben (16) einen elastischen oder biegsamen Abschnitt, der die gleiche Länge wie der gebogene Abschnitt (14) des Grundkörpers (18) hat, und einen nichtbiegsamen Abschnitt aufweist, wobei der Kolben (16) einen konstanten Durchmesser aufweist.

2. Kartusche nach Anspruch 1,
**dadurch gekennzeichnet, dass** der nichtbiegsame Abschnitt des Kolbens (16) eine Länge aufweist, die das zwei- oder dreifache des Innendurchmessers des zylindrischen Abschnitts (12) des Grundkörpers (18) aufweist.

3. Kartusche nach einem der Ansprüche 1 oder 2,
**dadurch gekennzeichnet, dass** ein freier Endbereich eines Abschnitts, insbesondere des ersten Abschnitts (12), mit dem Lastangriffsmittel (26) versehen ist.

4. Kartusche nach einem der vorhergehenden Ansprüche,
**dadurch gekennzeichnet, dass** das Lastangriffsmittel (26) wenigstens ein Formschlusselelement ist, das in Form eines den Außendurchmesser eines Abschnitts radial überragenden Flansches oder eines an der Außenseite eines Abschnitts angeordneten Außengewindes (50) bzw. Hinterschnittes ausgebildet ist, wobei insbesondere der Flansch den Außendurchmesser des Abschnitts radial überragt.

5. Kartusche nach einem der Ansprüche 1 bis 3,
**dadurch gekennzeichnet, dass** der gebogene zweite Abschnitt (14) zwischen dem ersten, zylindrischen Abschnitt (12) und der Ausbringtülle (20) angeordnet ist.

6. Kartusche nach einem der vorhergehenden Ansprüche,
**dadurch gekennzeichnet, dass** zumindest ein sich an den zweiten Abschnitt (14) anschließender Bereich des ersten Abschnitts (12) transparent ausgebildet ist.

7. Kartusche nach Anspruch 6,
**dadurch gekennzeichnet, dass** der transparente Bereich aus einem transparenten Material gefertigt ist.

8. Kartusche nach Anspruch 7,
**dadurch gekennzeichnet, dass** das transparente Material farbig ist oder mit einer transparenten, farbigen Schicht versehen ist.

9. Kartusche nach Anspruch 8,
**dadurch gekennzeichnet, dass** das farbige Material oder die farbige Schicht lichtundurchlässig ist für Licht mit einer Wellenlänge von 350 nm bis 500 nm.

10. Kartusche nach einem der vorhergehenden Ansprüche,
**dadurch gekennzeichnet, dass** die Ausbringtülle (20) gebogen ausgebildet ist.

11. Kartusche nach Anspruch 10,
**dadurch gekennzeichnet, dass** die Ausbringtülle (20) die gleiche Biegung wie der zweite Abschnitt (14) aufweist.

12. Kartusche nach einem vorhergehenden Ansprüche,
**dadurch gekennzeichnet, dass** ein Innenkanal (32) der Ausbringtülle (20) über seine gesamte Länge einen konstanten Durchmesser aufweist.

13. Kartusche nach einem der Ansprüche 1 bis 11,
**dadurch gekennzeichnet, dass** sich eine lichte Weite eines Innenkanals (32) der Ausbringtülle (20) zum freien Ende der Ausbringtülle (20) hin vergrößert.

14. Kartusche nach einem der vorhergehenden Ansprüche,
**dadurch gekennzeichnet, dass** der größte Teil des Kolbens (16) im unausgepressten Zustand der Kartusche im ersten Abschnitt (12) angeordnet ist.

15. Kartusche nach einem der Ansprüche 1 bis 13,
**dadurch gekennzeichnet, dass** zumindest ein der Ausbringtülle (20) zugewandter Endbereich des Kolbens (16) biegbar ausgebildet ist.

16. Kartusche nach einem der vorhergehenden Ansprüche,
**dadurch gekennzeichnet, dass** der Kolben (16) aus einem farbigen Material besteht, mit einer farbigen Schicht überzogen oder mit einer visuell erkennbaren Markierung versehen ist.

17. Kartusche nach einem der vorhergehenden Ansprüche,
**dadurch gekennzeichnet, dass** der erste Abschnitt (12) wenigstens eine seitliche Durchtrittsöffnung aufweist, deren Breite - betrachtet senkrecht zur Längserstreckung des ersten Abschnittes - kleiner als der Innendurchmesser des Grundkörpers (18) ist.

18. Kartusche nach einem der vorhergehenden Ansprüche,
**dadurch gekennzeichnet, dass** eine Auslassöffnung der Ausbringtülle (20) mit einer Abdeckkappe (66) verschließbar ist.

19. Kartusche nach Anspruch 18, **dadurch gekennzeichnet, dass** die Abdeckkappe (66) die gleiche Farbe aufweist wie der Kolben (16) und/oder der erste Abschnitt (12).

20. Kartusche nach einem der vorhergehenden Ansprüche,
**dadurch gekennzeichnet, dass** der erste Abschnitt (12) und der Kolben (16) miteinander zusammenwirkende Füllstandsanzeigen aufweisen.

21. Kartusche nach einem der Ansprüche 1 bis 19,
**dadurch gekennzeichnet, dass** der Grundkörper (18) und/oder die Ausbringtülle (20) und/oder die Abdeckkappe (66) aus Kunststoff gebildet ist.

## Claims

1. Cartridge for storing and applying a mass, especially a mass of dental material comprising a tube-shaped base body (18) which comprises a load engaging element (26) at one end region which is positively engaged with an application instrument, wherein an axially displaceable and at least partially bendable piston (16) is disposed in the base body (18), and wherein the base body (18) comprises a first substantially straight portion (12) and a second bent portion (14),
**characterized in that** an extrusion spout (20) is provided which is connected to the base body (18), the inner diameter of the extrusion spout being smaller than the inner diameter of the base body (18), and **in that** the piston (16) comprises an elastic, bendable portion with the same length as the bent portion (14) of the base body (18) and a non-bendable portion, wherein the piston (16) comprises a constant diameter.

2. Cartridge as claimed in claim 1,
**characterized in that** the non-bendable portion of the piston (16) has a length which is twice or three times as long as the inner diameter of the cylindrical portion (12) of the base body (18).

3. Cartridge as claimed in claims 1 or 2,
**characterized in that** a free end region of a portion, especially of the first portion (12), is provided with a load engaging element (26).

4. Cartridge as claimed in any of the preceding claims,
**characterized in that** the load engaging element (26) is at least one positive connection element in the form of a radially projecting flange over the outer diameter of a portion, or an outer threaded structure (50) that is located on the outer side of a portion or a back cut structure, wherein especially the flange radially projects over the outer diameter of the portion.

5. Cartridge as claimed in claims 1 to 3,
**characterized in that** the bent second portion (14) is disposed between the first, cylindrical portion (12) and the extrusion spout (20).

6. Cartridge as claimed in any of the preceding claims,
**characterized in that** a region of the first portion (12) which is connected with the second portion (14) is configured as a transparent portion.

7. Cartridge as claimed in claim 6,
**characterized in that** the transparent region is comprised of a transparent material.

8. Cartridge as claimed in claim 7,
**characterized in that** the transparent material is a colored material or provided with a transparent, colored coating.

9. Cartridge as claimed in claim 8,
**characterized in that** the colored material or the colored coating prevents the passage of light therethrough having a wavelength of between 350 nm to 500 nm.

10. Cartridge as claimed in any of the preceding claims,
**characterized in that** the extrusion spout (20) is configured as a bent piece.

11. Cartridge as claimed in claim 10,
**characterized in that** the extrusion spout (20) has the same bending configuration as the second portion (14).

12. Cartridge as claimed in any of the preceding claims,
**characterized in that** an inner channel (32) of the extrusion spout (20) has a constant diameter along its entire length.

13. Cartridge as claimed in claims 1 to 11,
**characterized in that** an inner diameter of an inner channel (32) of the extrusion spout (20) enlarges in the direction toward the free end of the extrusion spout (20).

14. Cartridge as claimed in any of the preceding claims,
**characterized in that** the principal part of the piston (16) is disposed, in a non-extruded condition of the cartridge, in the first portion (12).

15. Cartridge as claimed in claims 1 to 13,
**characterized in that** at least a respective end region of the piston (16) that faces the extrusion spout (20) is configured as a bendable region.

16. Cartridge as claimed in any of the preceding claims,
**characterized in that** the piston (16) is comprised of a colored material, covered over with a colored coating or provided with a visually recognizable marking.

17. Cartridge as claimed in any of the preceding claims,
**characterized in that** the first portion (12) comprises at least one lateral through opening, whose width - as viewed perpendicularly to the longitudinal extent of the first portion - is smaller than the inner diameter of the base body (18).

18. Cartridge as claimed in any of the preceding claims,
**characterized in that** an outlet opening of the extrusion spout (20) is closeable via a cover cap (66).

19. Cartridge as claimed in claim 18,
**characterized in that** the cover cap (66) is comprised of the same color as the piston (16) and/or the first portion (12).

20. Cartridge as claimed in any of the preceding claims,
**characterized in that** the first portion (66) and the piston (16) are provided with fill level indicators that cooperate with one another.

21. Cartridge as claimed in claims 1 to 19,
**characterized in that** the base body (18) and/or the extrusion spout (20) and/or the cover cap (66) is comprised of plastic.

## Revendications

1. Cartouche pour le stockage et la diffusion d'une masse, en particulier une masse dentaire avec un corps principal (18) en forme de manchon, qui présente sur une extrémité un moyen d'application de charge (26) coopérant à engagement positif avec un instrument d'application, où un piston (16) est disposé dans le corps principal (18) axialement déplaçable et au moins partiellement pliable, et où le corps principal (18) présente une première section (12) essentiellement droite ainsi qu'une deuxième, section (14) courbée, **caractérisée en ce qu'**un bec de décharge (20) est prévu qui s'attache au corps principal (18), dont le diamètre intérieur est inférieur au diamètre intérieur du corps principal (18), et que le piston (16) a une section élastique ou souple qui a la même longueur que la section incurvée (14) du corps principal (18) et une section pas flexible, où le piston (16) présente un diamètre constant.

2. Cartouche selon la revendication 1, **caractérisée en ce que** la partie non flexible du piston (16) présente une longueur, qui a deux ou trois fois le diamètre interne de la partie cylindrique (12) du corps principal (18).

3. Cartouche selon l'une des revendications 1 ou 2, **caractérisée en ce qu'**une extrémité libre, en particulier de la première section (12), est équipée du moyen d'application de charge (26).

4. Cartouche selon l'une des revendications précédentes, **caractérisée en ce que** le moyen d'application de charge (26) est au moins un élément à ajustement de forme, sous la forme d'une bride dépassant radialement le diamètre extérieur d'une section, ou d'un filetage extérieur (50) disposé à l'extérieur d'une section ou une contre-dépouille, où en particulier la bride dépasse radialement le diamètre extérieur de la section.

5. Cartouche selon une des revendications 1 à 3, **caractérisée en ce que** la deuxième section incurvée (14) est disposée entre la première section cylindrique (12) et le bec de décharge (20).

6. Cartouche selon l'une des revendications précédentes, **caractérisée en ce qu'**au moins une zone de la première section (12) situé dans la deuxième section (14) est transparente.

7. Cartouche selon la revendication 6, **caractérisée en ce que** la région transparente est constituée d'un matériau transparent.

8. Cartouche selon la revendication 7, **caractérisée en ce que** le matériau transparent est coloré ou est doté d'une couche de couleur transparente.

9. Cartouche selon la revendication 8, **caractérisée en ce que** la matière de couleur ou la couche de couleur est opaque à la lumière ayant une longueur d'onde entre 350 nm et 500 nm.

10. Cartouche selon l'une des revendications précédentes, **caractérisée en ce que** le bec de décharge (20) est plié.

11. Cartouche selon la revendication 10, **caractérisée en ce que** le bec de décharge (20) présente la même courbure que la deuxième section (14).

12. Cartouche selon l'une des revendications précédentes, **caractérisée en ce qu'**un canal interne (32) du bec de décharge (20) présente un diamètre constant sur toute sa longueur.

13. Cartouche selon l'une des revendications 1 à 11, **caractérisée en ce qu'**un espace ouvert d'un canal interne (32) du bec de décharge (20) s'élargisse vers l'extrémité libre du bec de décharge (20).

14. Cartouche selon l'une des revendications précédentes, **caractérisée en ce que** la plus grande partie du piston (16) dans l'état non extrudé de la cartouche est disposée dans la première section (12).

15. Cartouche selon l'une des revendications 1 à 13, **caractérisée en ce qu'**au moins une extrémité du piston (16) tournée vers le bec de décharge (20) est formée pliable.

16. Cartouche selon l'une des revendications précédentes, **caractérisée en ce que** le piston (16) est constitué d'un matériau coloré, recouvert d'une couche de couleur ou doté d'un marquage visuellement reconnaissable.

17. Cartouche selon l'une des revendications précédentes, **caractérisée en ce que** la première section (12) présente au moins une ouverture de passage latérale, dont la largeur - vu perpendiculairement à l'extension longitudinale de la première section - est moins que le diamètre interne du corps principal (18).

18. Cartouche selon l'une des revendications précédentes, **caractérisée en ce qu'**un orifice de sortie du bec de décharge (20) peut être fermé d'un capuchon (66) est fermé.

19. Cartouche selon la revendication 18, **caractérisée en ce que** le capuchon (66) présente la même couleur que les pistons (16) et/ou la première section (12).

20. Cartouche selon l'une des revendications précédentes, **caractérisée en ce que** la première section (12) et le piston (16) présentent des indicateurs de niveau agissant ensemble.

21. Cartouche selon l'une des revendications 1 à 19, **caractérisée en ce que** le corps principal (18), et/ou le bec de décharge (20), et/ou le capuchon (66) sont formés en plastique.
